# FASCICULE DE BREVET EUROPEEN

(11) **EP 1 306 248 B1**
(45) Date de publication et mention de la délivrance du brevet: **26.07.2006**
(21) Numéro de dépôt: 02292657.0
(22) Date de dépôt: 25.10.2002
(51) Int. Cl.: B60H 1/00, B60H 1/34, B62D 65/00, B60R 13/02

(54) **Ensemble pour véhicule comprenant un conduit et un dispositif d'habillage intérieur, procédé de montage de l'ensemble et dispositif d'habillage intérieur**
Kraftfahrzeugeinheit mit einer Leitung und einer Innenverkleidung, Verfahren zur Herstellung derselben und Innenverkleidung
Unit for a vehicle comprising a conduit and a inner liner panel, method for mounting such an assembly and inner liner panel

(30) Priorité: 29.10.2001 FR 0113960
(43) Date de publication de la demande: 02.05.2003
(73) Titulaire: Renault s.a.s., 92100 Boulogne Billancourt (FR)
(72) Inventeur: Grisot, Sylvain, 78150 Le Chesnay (FR)

(56) Documents cités:
- EP-A- 0 346 154
- EP-A- 0 872 384
- FR-A- 2 507 975
- FR-A- 2 785 233
- US-A- 5 328 152
- US-A- 6 062 635

## Description

### DOMAINE TECHNIQUE

L'invention concerne un ensemble pour véhicule, cet ensemble comprenant au moins un conduit appartenant à une partie supérieure du véhicule, ainsi qu'un dispositif d'habillage intérieur comportant en outre une garniture.

De plus, l'invention se rapporte à un procédé de montage d'un ensemble tel que celui mentionné ci-dessus.

### ETAT DE LA TECHNIQUE ANTERIEURE

L'état de la technique antérieure est divulgué par le document US 6 062 635.

On connaît aussi le document US-A-2295750 divulguant un véhicule comprenant une installation de ventilation et de climatisation de l'habitacle du véhicule. Cette installation comporte des moyens permettant d'acheminer l'air traité jusque dans une partie supérieure du véhicule. Cet air arrive alors dans un espace fermé, défini d'une part par le toit du véhicule, et d'autre part par un panneau additionnel situé sous le toit. Ce panneau additionnel comprend une pluralité d'ouvertures réglables manuellement par un passager ou par un conducteur se trouvant à l'intérieur du véhicule, de sorte que dans une position ouverte, les ouvertures réglables autorisent l'introduction de l'air traité provenant de l'espace fermé, cet air étant diffusé vers l'intérieur de l'habitacle du véhicule.

Cependant, le type de panneau additionnel décrit dans ce document n'est pas compatible avec un véhicule dont une ossature de la partie supérieure de ce véhicule comprend des conduits autorisant la circulation de l'air traité.

Par ailleurs, dans ce document, aucune liaison entre le panneau additionnel muni de ses ouvertures réglables et le toit n'est décrite.

De plus, ce document s'éloigne du domaine technique de l'invention, en raison de la conception de son installation de ventilation et de climatisation. Cette installation ne trouverait plus aucune application dans les véhicules modernes, ces derniers n'utilisant plus d'espace sur la totalité de la surface du toit pour y faire transiter l'air traité, mais mettant en oeuvre des conduits creux.

Enfin, dans ce type de véhicule, la distance verticale séparant le toit et le panneau additionnel est très importante, notamment en raison de l'encombrement et de la cinématique spécifique des ouvertures réglables. La solution technique employée ne répond manifestement pas à une nécessité de compactage des différents éléments constituant le véhicule, ceci constituant pourtant une priorité pour les constructeurs lors de la conception des véhicules modernes.

Dans le domaine technique de l'invention, on connaît des procédés de montage de différents éléments d'une partie supérieure d'un véhicule, ce véhicule comprenant une partie supérieure, cette partie supérieure comportant en outre des conduits autorisant la circulation de l'air.

Dans le procédé, on distingue plusieurs étapes distinctes. Tout d'abord, une garniture est posée en partie supérieure du véhicule, indépendamment de toute autre pièce. Ensuite, une seconde étape consiste à poser un groupe d'éléments, ce groupe comprenant par exemple une pluralité d'aérateurs, de poignées de maintien en virage, d'éclaireurs, et de pièces plastiques.

Ce procédé présente l'inconvénient majeur de nécessiter deux étapes distinctes pour fixer la garniture ainsi que les aérateurs de la partie supérieure du véhicule. Cette multiplicité d'étapes est particulièrement regrettable dans la mesure où le temps de montage de cette partie du véhicule n'est que très peu optimisé, et de surcroît coûteux.

### EXPOSÉ DE L'INVENTION

Le but de l'invention est de remédier aux inconvénients cités ci-dessus en proposant un ensemble pour véhicule à montage simplifié, cet ensemble comprenant au moins un conduit autorisant la circulation d'air et appartenant à une partie supérieure de ce véhicule, cet ensemble comprenant également un dispositif d'habillage intérieur comportant en outre une garniture.

Enfin, la présente invention a pour but de proposer un procédé de montage d'un ensemble tel que celui proposé précédemment.

Pour ce faire, l'invention a pour objet un ensemble pour véhicule, cet ensemble comprenant au moins un conduit appartenant à une partie supérieure de ce véhicule, chaque conduit autorisant la circulation d'air. L'ensemble comprend de plus un dispositif d'habillage intérieur comportant une garniture. Selon l'invention, le dispositif comprend en outre au moins un aérateur solidaire de la garniture, et l'ensemble comprend des moyens uniques de fixation du dispositif sur la partie supérieure du véhicule.

Avantageusement, le fait d'avoir des moyens uniques de fixation du dispositif d'habillage intérieur sur la partie supérieure du véhicule, permet de supprimer des étapes lors du montage de la garniture et des aérateurs. En effet, contrairement aux procédés de l'art antérieur, la garniture et les aérateurs sont montés et fixés en même temps sur la partie supérieure du véhicule, à l'aide des mêmes moyens de fixation.

Ceci entraîne une réduction du temps de montage de cette partie du véhicule, cette réduction se traduisant directement par un gain financier. De plus, en adoptant un tel ensemble, les performances relatives à la circulation d'air restent identiques à celles des véhicules dont la garniture et les aérateurs sont montés successivement.

Chaque aérateur du dispositif comprend un joint d'étanchéité apte à coopérer avec un orifice d'un conduit.

Cette solution présente l'avantage d'établir une étanchéité parfaite entre les orifices des conduits par lesquels sort l'air traité, et les différents aérateurs du dispositif. De plus, cette étanchéité est réalisée par déformation du joint d'étanchéité lors du montage du dispositif sur la partie supérieure du véhicule à l'aide des moyens uniques de fixation, sans la nécessité d'effectuer une autre intervention.

De façon préférée, chaque aérateur du dispositif d'habillage intérieur comprend une façade et un contre cadre, ces deux éléments prenant en sandwich la garniture du dispositif.

Cette caractéristique particulière engendre une réduction de l'encombrement du groupe d'éléments constitué par les conduits de la partie supérieure du véhicule, la garniture, ainsi que les aérateurs. En effet, cette disposition permet d'utiliser des aérateurs peu encombrants, réduisant ainsi l'espace entre les conduits et la garniture munie de ses aérateurs. La fixation des aérateurs sur la garniture est avantageusement simple et offre la possibilité de placer les moyens uniques de fixation du dispositif à tout emplacement de la garniture réputé approprié. C'est donc la fixation de la garniture sur la partie supérieure du véhicule qui assure le maintien des aérateurs sur cette partie. Les aérateurs assemblés sur la garniture en amont du montage de la partie supérieure du véhicule ne présentent donc aucune liaison directe de fixation avec la partie supérieure du véhicule.

De façon préférentielle, l'ensemble comprend au moins une poignée de maintien coopérant avec ledit dispositif et portant lesdits moyens uniques de fixation.

Avantageusement, les moyens uniques de fixation du dispositif d'habillage intérieur sont identiques à ceux utilisés pour fixer les poignées de maintien sur la partie supérieur du véhicule. Il en résulte une diminution de l'encombrement de la partie supérieure du véhicule, ainsi qu'une facilité dans le montage des différents éléments de cette partie supérieure.

Un autre objet de la présente invention concerne un dispositif d'habillage intérieur pour véhicule apte à être utilisé dans un ensemble tel que celui décrit ci-dessus.

En outre, l'invention a également pour objet un procédé de montage d'un tel ensemble. Le procédé selon l'invention comprend les étapes suivantes :
- fixation des aérateurs du dispositif sur la garniture dudit dispositif,
- positionnement du dispositif d'habillage intérieur de sorte que chaque aérateur soit en regard d'un orifice d'un conduit de l'ensemble,
- fixation du dispositif sur une structure extérieure du véhicule.

D'autres avantages et caractéristiques de l'invention apparaîtront dans la description détaillée, non limitative, ci-dessous.

### BRÈVE DESCRIPTION DES DESSINS

La description sera faite au regard des dessins annexés parmi lesquels :
- la figure 1 représente une vue schématique en coupe longitudinale d'une partie supérieure d'un véhicule comportant un ensemble selon un mode préféré de réalisation de l'invention,
- la figure 2 représente une vue schématique en coupe transversale d'une partie supérieure d'un véhicule comportant un ensemble selon un mode préféré de réalisation de l'invention.

### EXPOSÉ DÉTAILLÉ D'UN MODE DE RÉALISATION PREFERE

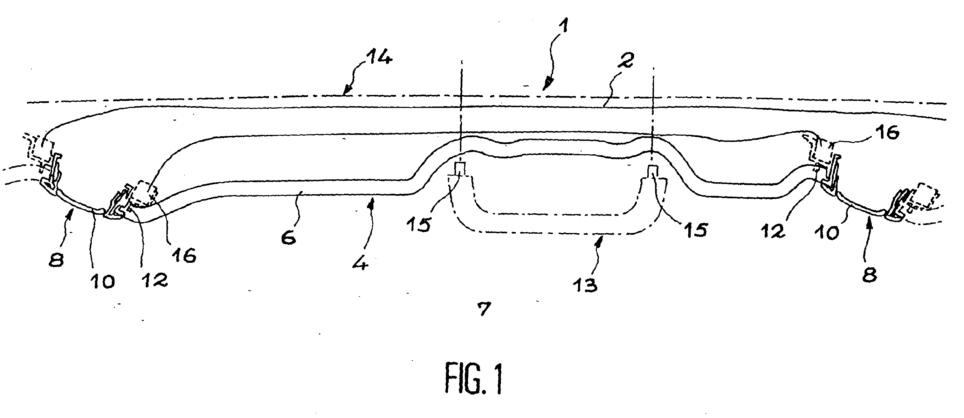

En référence à la figure 1, on voit un ensemble 1 appartenant à une partie supérieure d'un véhicule automobile (non représenté). Notons que la partie supérieure peut être assimilée au toit et aux éléments se situant à proximité du toit du véhicule.

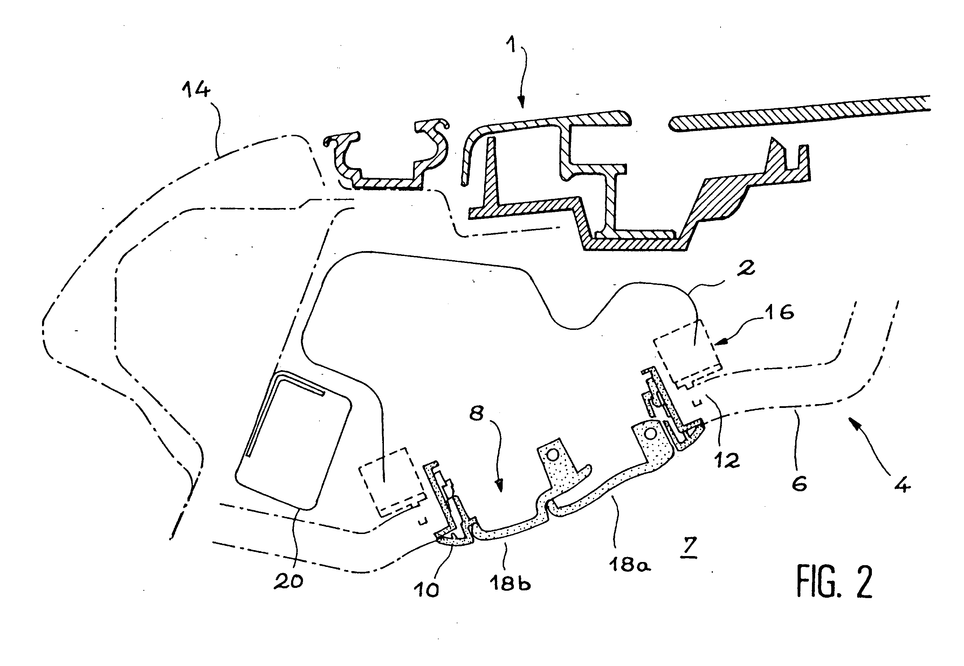

Parmi ces éléments de l'ensemble 1, on compte tout d'abord au moins un conduit 2, de préférence deux, chacun de ces conduits 2 (un seul d'entre eux étant représenté sur les figures 1 et 2) se situant d'un côté du véhicule et s'étendant de l'avant à l'arrière du toit selon une direction principale longitudinale du véhicule. Ces conduits 2 sont généralement creux et autorisent par conséquent la circulation d'air provenant d'une installation de chauffage, de ventilation et de climatisation (non représentée).

Les conduits 2 peuvent également avoir la particularité de constituer au moins partiellement, en tant que longerons, une ossature de la partie supérieure du véhicule, cette fonction de structure principale du véhicule pouvant donc être ajoutée à celle de l'acheminement de l'air traité.

L'ensemble 1 comprend en outre un dispositif d'habillage intérieur 4. Le dispositif 4 comporte une garniture 6, visible depuis l'intérieur de l'habitacle 7 du véhicule, et ayant une fonction principale esthétique. La garniture 6 est un panneau qui s'étend sensiblement sur une même surface que celle du toit du véhicule.

Selon l'invention, le dispositif d'habillage intérieur 4 comprend de plus au moins un aérateur 8 solidaire de la garniture 6. De préférence, les aérateurs sont au nombre de quatre, chacun étant destiné à acheminer l'air traité par l'installation de chauffage, de ventilation et de climatisation vers une place différente du véhicule. La disposition la plus courante comprend donc une paire d'aérateurs 8 à l'avant du véhicule ainsi qu'une autre paire à l'arrière de ce véhicule, chaque paire étant agencée de telle sorte que l'un des aérateurs 8 est placé à gauche et l'autre à droite du véhicule, pour former une rangée d'aérateurs droits alimentés par un conduit 2 et une rangée d'aérateurs gauches alimentés par un autre conduit 2.

Le dispositif d'habillage intérieur 4, comprenant la garniture 6 ainsi que les aérateurs 8, est fixé sur la partie supérieure du véhicule à l'aide de moyens uniques de fixation appartenant à l'ensemble 1. On entend par moyens uniques de fixation des moyens permettant de fixer, lors de leur montage, à la fois la garniture 6 et les aérateurs 8. Ces moyens uniques de fixation du dispositif 4 sont donc communs à la garniture 6 et aux aérateurs 8. Ils peuvent notamment être constitués d'agrafes encliquetables ou de vis 15.

Selon un mode préféré de réalisation de l'invention, les aérateurs 8 comprennent une façade 10 et un contre cadre 12.

Avec une telle disposition, la façade 10 et le contre cadre 12 sont aptes à prendre en sandwich la garniture 6. Cela assure le maintien des aérateurs 8 sur la garniture 6, indépendamment des moyens uniques de fixation du dispositif 4 sur la partie supérieure du véhicule.

Ainsi, on pourra placer les moyens uniques de fixation du dispositif 4 à l'emplacement de la garniture 6 qui apparaîtra comme étant le plus judicieux, sans avoir à se préoccuper de la fixation des aérateurs 8 sur la partie supérieure.

De préférence, l'ensemble 1 comprend au moins une poignée de maintien en virage 13 apte à être fixée sur la partie supérieure du véhicule. Dans ce cas, les moyens pour fixer les poignées 13 peuvent être les moyens uniques de fixation du dispositif 4, permettant ainsi de monter et de fixer en une seule fois et à l'aide d'un seul groupe de moyens, le dispositif d'habillage intérieur 4 et les poignées de maintien en virage 13.

Les moyens uniques de fixation du dispositif 4 coopèrent avec une structure extérieure 14 appartenant à l'ensemble 1, cette structure extérieure 14 constituant en outre une surface latérale gauche et une surface latérale droite de la partie supérieure du véhicule, cette structure 14 étant visible depuis l'extérieur de ce véhicule. De plus, la structure extérieure 14 est apte à recevoir les conduits 2 qui suivent sensiblement un même chemin que cette structure 14, la fixation entre les éléments s'effectuant de préférence par clipsage. En référence à la figure 2, il est à noter que cette structure extérieure 14 permet également d'accueillir un coussin gonflable 20 de chaque côté du véhicule, ce coussin gonflable 20 se situant alors entre la structure extérieure 14 et un conduit 2.

Le dispositif d'habillage intérieur 4 comporte donc une garniture 6 et une pluralité d'aérateurs 8. Les aérateurs 8 sont placés sur la garniture 6 de sorte que lorsque le dispositif 4 est monté sur la partie supérieure du véhicule, chacun des aérateurs 8 coopère avec un orifice se situant sur un conduit 2, afin d'établir une connexion entre le conduit 2 et l'intérieur de l'habitacle 7 du véhicule. Plus précisément, un joint d'étanchéité 16 porté par le contre cadre 12 de l'aérateur 8 coopère avec des arêtes d'un orifice du conduit 2. L'air circulant à travers l'installation peut ainsi être acheminé sans fuite jusque dans l'habitacle 7.

La solution adoptée par l'invention permet d'avoir un espace restreint entre la garniture 6 et les conduits 2, entraînant par conséquent un gain de place à l'intérieur de l'habitacle 7. Ceci est en outre favorisé en employant des aérateurs 8 comprenant deux ailettes de fermeture 18a,18b, visibles sur la figure 2, ce type d'aérateur 8 ayant un encombrement restreint.

Le procédé de montage de l'ensemble 1 est le suivant.

Tout d'abord, on commence par effectuer, par exemple hors de la chaîne de montage du véhicule, la fixation des aérateurs 8 sur la garniture 6, afin de donner au dispositif d'habillage intérieur 4 sa configuration finale d'avant montage sur la partie supérieure du véhicule.

Une étape suivante peut consister à installer les coussins gonflables 20 sur la structure extérieure 14, cette étape étant suivie par une opération de montage des conduits 2 sur la structure extérieure 14.

On procède ensuite au positionnement du dispositif 4, de sorte que chaque aérateur 8 soit en regard d'un orifice se situant dans un conduit 2 de l'ensemble 1, et plus particulièrement, on s'assure que chaque joint d'étanchéité 16 se positionne correctement par rapport aux arêtes de l'orifice du conduit avec lequel le joint 16 doit coopérer.

Une fois positionné, on fixe le dispositif d'habillage intérieur 4 sur la partie supérieure du véhicule, à l'aide des moyens uniques de fixation, ces moyens pouvant être portés par une ou plusieurs poignées de maintien en virage 13.

Lors de la fixation du dispositif 4, les joints d'étanchéité 16 se déforment sur les arêtes des orifices des conduits 2, sous l'action des moyens uniques de fixation. L'étanchéité entre les conduits 2 et l'habitacle 7 est alors correctement assurée.

Bien entendu, diverses modifications peuvent être apportées par l'homme de l'art à l'ensemble et au procédé qui viennent d'être décrits, uniquement à titre d'exemples non limitatifs.

## Revendications

1. Ensemble (1) pour véhicule, comprenant au moins un conduit (2) appartenant à une partie supérieure de ce véhicule, chaque conduit (2) autorisant la circulation d'air, cet ensemble (1) comprenant en outre un dispositif d'habillage intérieur (4) comportant une garniture (6), ainsi qu'au moins un aérateur (8) solidaire de la garniture (6), l'ensemble (1) comprenant des moyens uniques de fixation du dispositif (4) sur la partie supérieure du véhicule, **caractérisé en ce que** chaque aérateur est muni d'un joint d'étanchéité (16) apte à coopérer avec un orifice d'un conduit (2).

2. Ensemble (1) selon la revendication 1, **caractérisé en ce que** chaque aérateur (8) du dispositif (4) comprend une façade (10) et un contre cadre (12), ces deux éléments prenant en sandwich ladite garniture (6) du dispositif (4).

3. Ensemble (1) selon la revendication 2, **caractérisé en ce que** ledit contre cadre (12) porte le joint d'étanchéité (16).

4. Ensemble (1) selon l'une quelconque des revendications précédentes, **caractérisé en ce que** l'ensemble (1) comprend en outre au moins une poignée de maintien (13) coopérant avec ledit dispositif (4) et portant lesdits moyens uniques de fixation.

5. Ensemble (1) selon l'une quelconque des revendications précédentes, **caractérisé en ce que** l'ensemble (1) comprend une structure extérieure (14) recevant lesdits moyens uniques de fixation, chaque conduit (2) de l'ensemble (1) étant fixé à cette structure extérieure (14).

6. Ensemble (1) selon l'une quelconque des revendications précédentes, **caractérisé en ce que** le dispositif (4) comprend quatre aérateurs (8), chacun destiné à diriger l'air vers une place différente du véhicule.

7. Ensemble (1) selon l'une quelconque des revendications précédentes, **caractérisé en ce que** chaque aérateur (8) du dispositif (4) comprend deux ailettes de fermeture (18a,18b).

8. Procédé de montage d'un ensemble (1) pour véhicule selon l'une quelconque des revendications 1 à 7, **caractérisé en ce qu'**il comprend les étapes suivantes :
- fixation des aérateurs (8) du dispositif (4) sur la garniture (6) dudit dispositif (4),
- positionnement du dispositif d'habillage intérieur (4) de sorte que chaque aérateur (8) muni du joint d'étanchéité soit en regard d'un orifice d'un conduit (2) de l'ensemble (1),
- fixation du dispositif (4) sur une structure extérieure (14) du véhicule.

## Claims

1. An assembly (1) for a vehicle comprising at least one duct (2) belonging to an upper portion of this vehicle, each duct (2) enabling air to circulate, this assembly (1) further comprising an inner liner device (4) comprising a gasket (6) and at least one ventilator (8) rigid with the gasket (6), the assembly (1) comprising single means for fastening the device (4) to the upper portion of the vehicle, **characterised in that** each ventilator is provided with a sealing joint (16) adapted to cooperate with an opening of a duct (2).

2. An assembly (1) as claimed in claim 1, **characterised in that** each ventilator (8) of the device (4) comprises a façade (10) and a counter-frame (12), these two members sandwiching the gasket (6) of the device (4).

3. An assembly (1) as claimed in claim 2, **characterised in that** the counter-frame (12) bears the sealing joint (16).

4. An assembly (1) as claimed in any one of the preceding claims, **characterised in that** the assembly (1) further comprises at least one grab handle (13) cooperating with the device (4) and bearing the single fastening means.

5. An assembly (1) as claimed in any one of the preceding claims, **characterised in that** the assembly (1) comprises an external structure (14) receiving the single fastening means, each duct (2) of the assembly (1) being secured to this external structure (14).

6. An assembly (1) as claimed in any one of the preceding claims, **characterised in that** the device (4) comprises four ventilators (8), each being adapted to direct air towards a different location of the vehicle.

7. An assembly (1) as claimed in any one of the preceding claims, **characterised in that** each ventilator (8) of the device (4) comprises two closure flanges (18a, 18b).

8. A method of installation of an assembly (1) for a vehicle as claimed in any one of claims 1 to 7, **characterised in that** it comprises the following stages:
- fastening of the ventilators (8) of the device (4) to the gasket (6) of the device (4),
- positioning of the inner liner device (4) such that each ventilator (8) provided with the sealing joint is opposite an opening of a duct (2) of the assembly (1),
- fastening of the device (4) on an external structure (14) of the vehicle.

## Patentansprüche

1. Gesamtheit (1) für ein Fahrzeug, aufweisend mindestens eine Leitung (2), welche zu einem oberen Teil dieses Fahrzeugs gehört, wobei jede Leitung (2) die Zirkulation von Luft erlaubt, wobei diese Gesamtheit (1) des Weiteren eine innere Verkleidungseinrichtung (4) aufweist, welche eine Auskleidung (6) sowie mindestens einen Belüfter (8), welcher fest mit der Auskleidung (6) verbunden ist, aufweist, wobei die Gesamtheit (1) einzige Mittel zur Befestigung der Einrichtung (4) an dem oberen Teil des Fahrzeugs aufweist, **dadurch gekennzeichnet, dass** jeder Belüfter mit einer Dichtung, (16) ausgestattet ist, welche fähig ist, mit einer Öffnung einer Leitung (2) zusammenzuwirken.

2. Gesamtheit (1) nach Anspruch 1, **dadurch gekennzeichnet, dass** jeder Belüfter (8) der Einrichtung (4) eine Vorderfront (10) und einen Gegenrahmen (12) aufweist, wobei diese beiden Elemente die Auskleidung (6) der Einrichtung (4) sandwichförmig umgreifen.

3. Gesamtheit (1) nach Anspruch 2, **dadurch gekennzeichnet, dass** der Gegenrahmen (12) die Dichtung (16) trägt.

4. Gesamtheit (1) nach irgendeinem der vorangegangenen Ansprüche, **dadurch gekennzeichnet, dass** die Gesamtheit (1) des Weiteren mindestens einen Haltegriff (13) aufweist, welcher mit der Einrichtung (4) zusammenwirkt und die einzigen Befestigungsmittel trägt.

5. Gesamtheit (1) nach irgendeinem der vorangegangenen Ansprüche, **dadurch gekennzeichnet, dass** die Gesamtheit (1) eine äußere Struktur (14) aufweist, welche die einzigen Befestigungsmittel aufnimmt, wobei jede Leitung (2) der Gesamtheit (1) an dieser äußeren Struktur (14) befestigt ist.

6. Gesamtheit (1) nach irgendeinem der vorangegangenen Ansprüche, **dadurch gekennzeichnet, dass** die Einrichtung (4) vier Belüfter (8) aufweist, wobei jeder dazu bestimmt ist, die Luft in Richtung zu einer verschiedenen Stelle des Fahrzeugs zu richten.

7. Gesamtheit (1) nach irgendeinem der vorangegangenen Ansprüche, **dadurch gekennzeichnet, dass** jeder Belüfter (8) der Vorrichtung (4) zwei Schließflügel (18a, 18b) aufweist.

8. Verfahren zur Montage einer Gesamtheit (1) für ein Fahrzeug gemäß irgendeinem der Ansprüche 1 bis 7, **dadurch gekennzeichnet, dass** es die nachfolgenden Schritte aufweist:
- Befestigung der Belüfter (8) der Einrichtung (4) an der Auskleidung (6) der Einrichtung (4),
- Positionierung der inneren Verkleidungseinrichtung (4), derart, dass jeder Belüfter (8), der mit der Dichtung versehen ist, gegenüber einer Öffnung einer Leitung (2) der Gesamtheit (1) ist,
- Befestigung der Einrichtung (4) an einer äußeren Struktur (14) des Fahrzeugs.
